# EUROPEAN PATENT APPLICATION

(11) **EP 3 396 653 A1**
(43) Date of publication of application: **31.10.2018**
(21) Application number: 17167721.4
(22) Date of filing: 24.04.2017
(51) Int. Cl.: G09B 5/00, G09B 7/00

(54) **LANGUAGE IDENTIFICATION**

(71) Applicant: Signum International AG, 6006 Luzern (CH)
(72) Inventor: OHMAYE, Enio, 6006 LUZERN (CH); ZHOU, Shijun, 6005 LUZERN (CH)
(74) Representative: Brann AB

(57) **Abstract**

The invention relates to an apparatus (10) for language identification, which apparatus (10) comprises a housing (11), at least one microphone (12) provided at the housing, a computational unit (14), a controller (16) for visual indicators (18), and visual indicators (18), wherein the apparatus (10) is configured to electronically receive at least one first input signal (Si1) from the at least one microphone (12), the at least one first input signal (Sin1) representing a spoken language received by the at least one microphone (12), wherein the apparatus 10() is configured to transmit the at least first input signal (Sin1) to computational circuitry (14) configured to indicate a match or no match with a desired language to be spoken and in response configured to transmit at least one first output signal (Sout1) to the controller (16) configured to control the one or more visual indicators (18) configured to at least visually indicate match or no match.

## Description

### Field of the Invention

The present invention relates to language identification and in particular to an apparatus for identifying a language spoken.

### Background of the Invention

Sometimes learners trying to learn a specific language tend to use a language other than the specific language they try to learn. Typically, the learners use their own mother language instead of the specific language they try to learn. This of course is a very inefficient way of learning a specific, typically new language.

There is, therefore, a need for a tool that makes it easier for a learner to be more encouraged to learn a specific language more efficiently, in particular by using that specific language as much as possible instead of another language.

### Summary of the Invention

Various aspects of the invention include a language identification tool embodied as an apparatus for language identification, which is characterized by what is stated in the independent claims. Various embodiments of the invention are disclosed in the dependent claims.

The apparatus according to various embodiments of the invention aims to help a user to more efficiently learn a desired specific language and in particular to encourage the learner to use that desired specific language instead of another language.

According to an aspect, the apparatus for language identification comprises a housing, at least one microphone provided at the housing, computational circuitry for language identification, a controller for visual indicators, possibly a means of producing sounds, and one or more visual indicators. The apparatus for language identification is configured to electronically receive at least one first input signal from the at least one microphone, the at least one first input signal representing a spoken language received by the at least one microphone, wherein the apparatus is configured to transmit the at least first input signal to the computational circuitry configured to indicate a match or no match with a desired specific language to be spoken and in response configured to transmit at least one first output signal to the controller configured to control the one or more visual indicators configured to at least visually indicate match or no match by means of indicating with different colors for match or no match. As an example, a match of the spoken language with the desired specific language such as English spoken and desired is typically indicated by green color, whereas no match, i. e. another language spoken than the desired language English is typically indicated by red color.

Typically, the visual indicators for language identification may each have multiple colors and intensity, and may be combined with audio output, or audio indicators. As an example, an alert may sound when the language spoken is not the desired specific language.

The apparatus, according to an aspect of the present disclosure, can be embodied as a an apparatus for language identification and configured to provide multiple colors and intensity, combined with audio input and/or output, is used to encourage language learners to use the desired language that they are learning. This apparatus can be embodied as a lamp.

The apparatus according to the above aspect and various embodiments can be embodied as a language identification tool.

Herein this disclosure, the term "desired specific language to be spoken" includes "speech" in the surroundings of the apparatus and can be any specific language, such as English.

### Description of the Drawings

In the following, various embodiments of the invention will be described in more detail with reference to the appended drawings, in which:

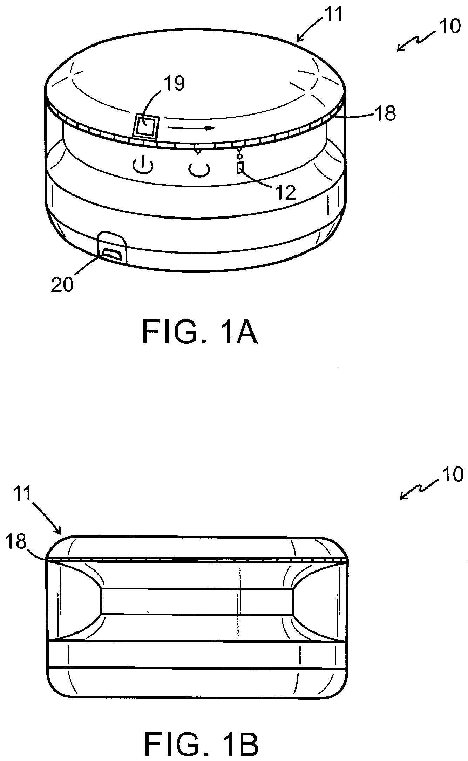

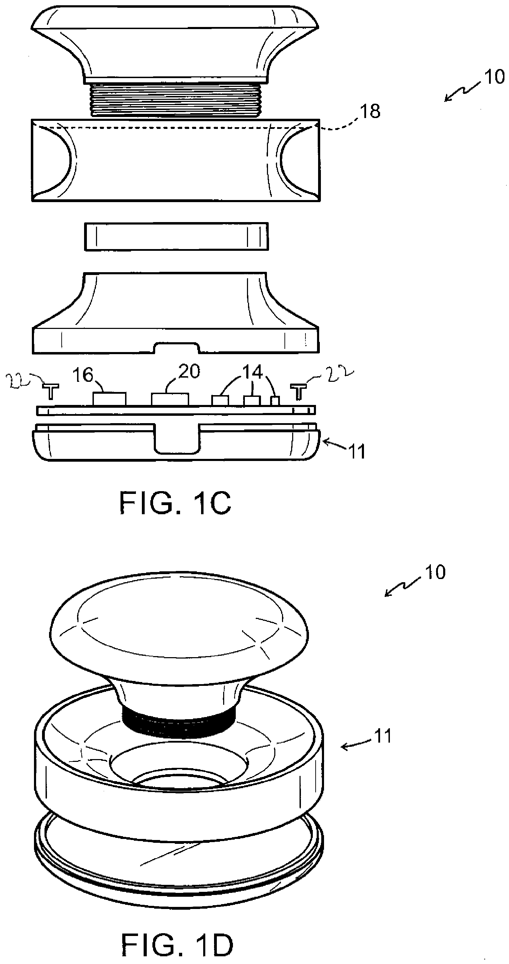

- FIGS. 1A-D: show an apparatus according to an embodiment of the invention; wherein Fig. 1A in a perspective view shows the apparatus fully assembled; wherein FIG. 1B shows the apparatus fully assembled in a view from a side; wherein Fig. 1C in a frontal exploded view shows the apparatus disassembled; and FIG. 1D in an exploded view shows an upper part of the apparatus disassembled,

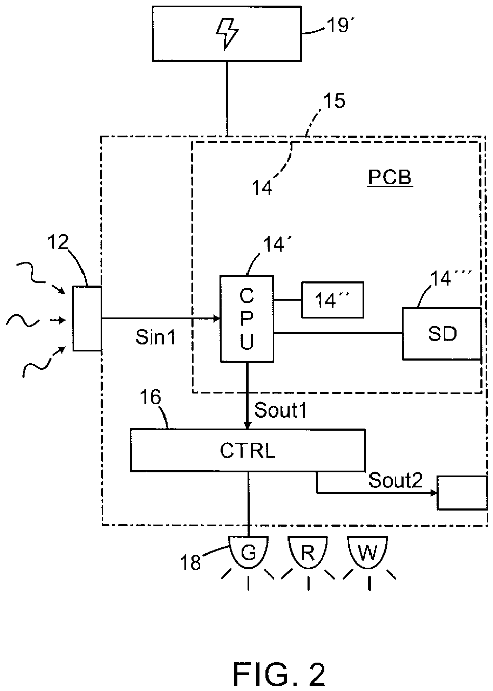

- FIG. 2: shows a schematic circuit-layout of the circuitry involved in the apparatus for language identification according to various embodiments of the invention

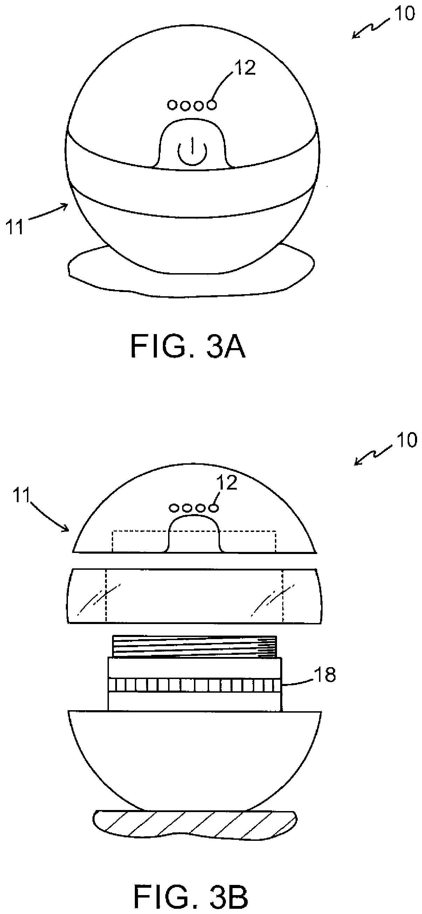

- FIGS. 3A-B: show an apparatus for language identification according to an alternative embodiment of the invention ("magic lamp"); wherein FIG. 3A in a perspective frontal view shows the apparatus fully assembled; wherein FIG. 3B shows the apparatus disassembled in a frontal view,

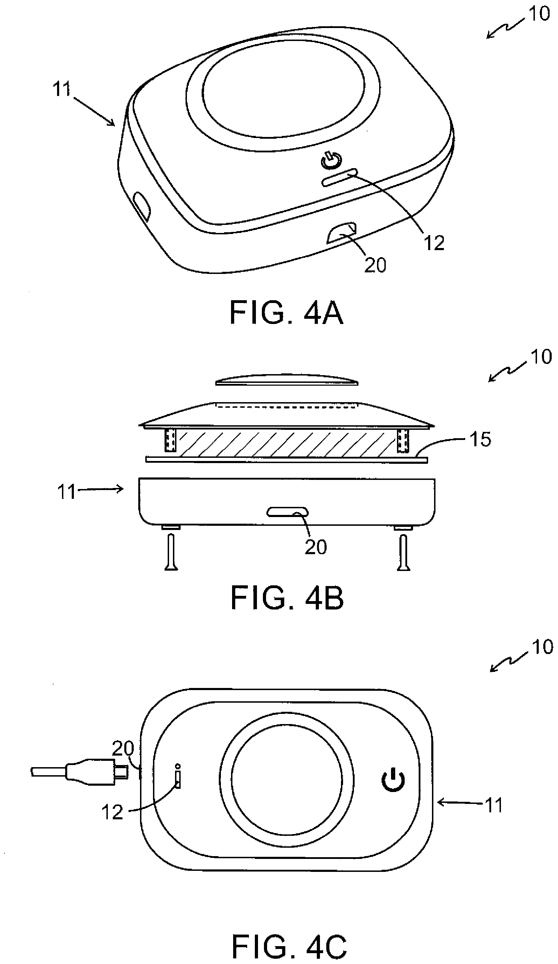

- FIGS. 4A-C: show an apparatus for language identification according to an alternative embodiment of the invention (portable); wherein FIG. 4A in a perspective view shows the apparatus fully assembled; wherein FIG. 4B shows the apparatus fully assembled in a view from a side and FIG. 4C shows the apparatus in a view from above, and

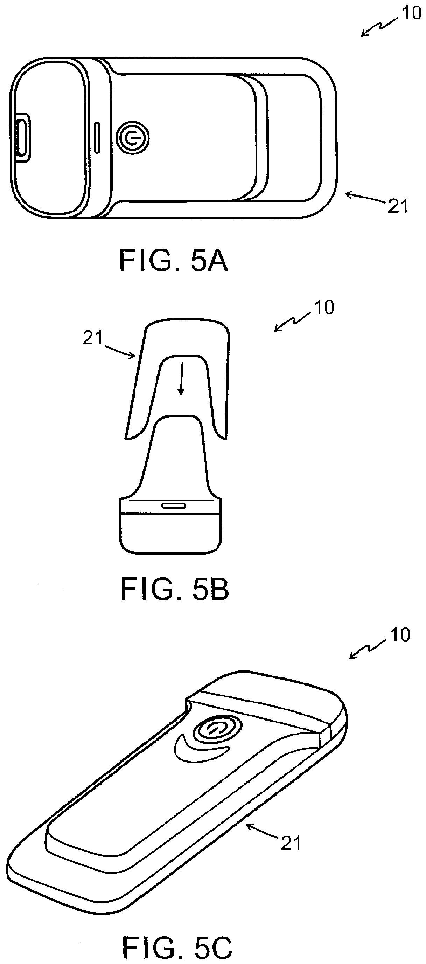

- FIGS. 5A-C: show an apparatus according to an alternative embodiment of the invention (portable); wherein FIG. 5A shows the apparatus in a perspective view; FIG. 5B shows the apparatus for language identification and a cover therefore separated before assembly together; and FIG. 5C shows the apparatus in another perspective view.

### Detailed Description of the Embodiments

In the following, several embodiments of the invention will be described in the context of a single stand-alone unit apparatus for language identification. It is to be noted, however, that the invention is not limited to a single stand-alone unit for language identification. In fact, the different embodiments have applications widely arranged in any distributed environment providing one or more of the features of the single stand-alone unit apparatus for language identification. As an example, a smart-phone for instance may provide all or part of the features of the computational circuitry. Thus, the invention is not limited to only inside housing built-in computational circuits in a single stand-alone apparatus for language identification, but also encompasses computational circuits that are connectable to the single stand-alone unit apparatus for language identification.

Now is referred to FIGS. 1A-D.

FIGS. 1A-D show an apparatus for language identification according to an embodiment of the invention; wherein Fig. 1A in a perspective view shows the apparatus fully assembled; wherein FIG. 1B shows the apparatus fully assembled in a view from a side; wherein Fig. 1C in a frontal exploded view shows the apparatus disassembled; and FIG. 1D in an exploded view shows an upper part of the apparatus 10 for language identification disassembled. FIG. 1C shows fastening means 22 such as screws for assembling the apparatus 10.

The apparatus 10 for language identification comprises a housing 11, at least one microphone 12 provided at the housing 11, computational circuitry 14 for language detection (shown in FIG. 1C), a controller 16 (shown in FIG. 1C) for visual indicators, and at least one visual indicator 18, herein one LED-stripe.

The microphone 12 is configured to capture a langue spoken in the surroundings of the apparatus 10. Only one microphone 12 is shown in FIG.1A, but according to alternative embodiments, more than one microphone 12 can be provided and at different locations at the housing 11 without departing from the invention.

Typically, as shown, there is provided an on/off switch 19, herein an on/off button configured to switch the apparatus 10 on or off. As an example, this on/off button can be embodied as a rotatable on/off switch 19 at a top of the apparatus 10 that may be rotated to be switched on or off (as indicated by the "on/off" symbol under the rotatable switch 19 shown in FIG. 1A). Also other types of on/off switches are possible even if not shown explicitly in FIG. 1A.

The visual indicators 18 may each have different colors and/or different intensity. The visual indicator 18 may be e.g. a light-emitting indicator such as a multi-colored LED-stripe (as shown in FIG. 1A and 1B). But, in alternative embodiments (not shown), the visual indicators 18 may be a plurality of visual indicators and each is typically configured to indicate a different color. As an example, one visual indicator can indicate green color, the other red color and one possibly white color. The term "visual" means visible to a user typically in a broad sense and includes any light-emitting device such as a colored lamp, LED capable to emit light having a particular color of light including at least one or more of green, red and white color of light.

The visual indicator 18 may also be combined with audio output, or audio indicators (not shown specifically). As an example, an alert may sound when the language spoken and captured by the microphone 12 is not the desired specific language, or when a non-desired language has been spoken a set time-period considered too long. This is typically provided by means of an audio indicator.

The visual indicator controller 16 may be connected to a means of producing sounds such as a sound source such as loudspeakers or earphones.

The apparatus 10 for language identification is configured to identify speech in its surrounding and uses conventional and per se well-known machine learning algorithms to identify the language being spoken. Examples of conventional machine-learning algorithms can be found for instance in the so-called "open-source TensorFlow library".

The identification can be made by computational circuitry 14 comparing languages and classifying the input to the microphone 12 according to degrees of certainty. For example, if it shows that the probability that the input is English as 92% and Chinese as 8%, then the apparatus 10, or typically the visual indicators 18, herein one of LEDs of the LED-stripe 18 displays green color. As a non-limiting example, typically the intensity of the color can indicate the degree of certainty. High intensity means high degree of certainty. Also fast flashing light emitted by the visual indicators 18 can indicate high degree of certainty.

According to one embodiment, as shown in FIG. 1A-D, but not limited to this particular embodiment, white color indicates silence or ambient noise captured by the microphone 12.

As yet an example, in the case of the desired language to be spoken is English, for example, the one or more visual indicators 18, and typically also part of or almost the entire apparatus 10, turns green if students are speaking English and red if students are speaking another language. and once it identifies the language being spoken, it sets the one or more visual indicators 18 to green/white/red depending on the probability that the apparatus 10, via the microphone 12 is hearing English/Noise/non-English respectively.

The apparatus 10 for language identification can be used in any situation in which learners need to be encouraged to use a specific language, in a variety of settings e.g., provided for schools, corporations, government, events.

As yet an example, after a few minutes detecting non-English (Red), the apparatus can sound an alarm (provided there is sound source) and change visual effects to indicate that students are failing continuously and approaching a negative outcome - setup by the administration of the school or organization in which they are learning.

The machine learning algorithms can be implemented on computers, tablets, phones, and is currently implemented using computational circuitry such as Raspberry Pi typically mounted on a printed circuit board (PCB) 15 as shown in FIG. 1C and connected to audio and lighting peripheral. This will be explained in more detail as follows.

Now is referred to FIG. 2, which shows a schematic circuit-layout of the circuitry involved in the apparatus 10 for language identification according to various embodiments of the invention

Herein this disclosure, the term "match" also includes a probability that there is a match. The probability can be set according to user preference. A user can be the learner such as a student using the apparatus or a supervising user, such as a teacher, government, company or the like.

According to an embodiment, the computational circuitry 14 comprises a processor 14', memory 14" including computer program code, the memory 14" and the computer program code configured to, with the processor 14', cause the computational circuitry 14 to electronically receive the at least one first input signal Sin1 from the at least one microphone 12, electronically determine the match of the language spoken, say Swedish with at least one desired language to be spoken, say English, and to transmit a first output signal Sout1 to the visual indicator controller(s) 16 configured to control one or more visual indicators 18 configured to at least visually indicate match (green light G) or no match (red light R), or possibly white light W in case of no language spoken (only noise) and captured by the microphone 12. Typically some of these components are provided on the PCB 15 and connected to the other components such as the microphone 12 and the visual indicators 18. The computational circuitry 14 is connected to the visual indicator controller 16 via signal lines (that can be considered to be similar to the signals). All components are typically provided on the PCB 15. For handling the signals to/from the signal lines, the PCB 15 comprises I/O circuitry (not explicitly shown).

The computational circuitry 14 or the PCB 15 may also include a video controller (not shown) and an audio controller (not shown) for generating signals that can be produced to the user with computer accessories.

There may be multiple processors e.g. a general purpose processor and a graphics processor and/or multiple different memories e.g. volatile memory for storing data and programs at run-time and nonvolatile memory like memory card "SD" card for permanently storing data and programs.

The visual indicator controller 16 may include circuitry and/or software on a processor like a microcontroller for generating signals to the visual indicators. Typically, all of these are mounted on the PCB 15.

As an example, the computational circuitry 14 comprises a conventional Raspberry Pi 3B computer, or any similar non-expensive programmable computational device.

According to this embodiment, the speech determination is done locally in the Raspberry Pi 3B. It is not sent to a phone or computer for processing. Other than a power source, the apparatus 10 according to this embodiment, does not require, but may have, connection with any other computational device like a smart-phone.

The computational circuitry 14 may also comprise input block 14"' for accepting input from the user e.g. through a keyboard via a further memory card 14 such as an SD card.

According to an embodiment, including the features of the above aspect, the apparatus 10 further comprises a power source 19' for powering the apparatus 10. The power source can be a (built-in) battery as schematically indicated in FIG. 2, or an external power source (not shown).

According to an embodiment, the apparatus 10 further comprises a communication port 20 (See FIG. 1A, 1C) for receiving power from an external power source for powering and/or charging the apparatus. The communication port 20 is typically a micro-USB connection, which can be used for communication and receiving power from an external power source for instance to charge the battery 19'.

According to an embodiment, the computational circuitry 14 comprises a Raspberry Pi 3B computer. The Raspberry Pi 3B computer runs the open-source TensorFlow library and once it identifies the language being spoken, it sets the visual indicators 18 to green/white/red depending on the probability that it is hearing English/Noise/non-English respectively.

Various other embodiments of the apparatus are shown in FIGS. 3-5.

Now is referred to FIGS. 3A-3B.

FIGS. 3 A-B show an apparatus 10 for language identification according to an alternative embodiment of the invention; wherein Fig. 3A in a perspective frontal view shows the apparatus 10 fully assembled; wherein FIG. 3B shows the apparatus 10 disassembled in a frontal view.

According to the embodiment shown in FIGS. 3A-B, the housing 11 is embodied as a transparent cover similar to a glas-bulb, or multi-colored lamp for producing visual indication such as a colored light produced by one or more colored lamps 18 provided underneath the cover 11 having holes through which light goes, for instance a LED-stripe, inside the transparent housing 11 and hence visible to the user. This embodiment can be considered to be a "magic lamp".

Now is referred to FIGS. 4A-C.

FIGS. 4A-C show an apparatus 10 for language identification according to an alternative embodiment of the invention; wherein FIG. 4A in a perspective view shows the apparatus 10 fully assembled; wherein FIG. 4B shows the apparatus 10 fully dis-assembled in a view from a side and FIG. 4C shows the apparatus 10 in a view from above. FIG. 4B shows fastening means 22 such as screws for assembling the apparatus 10.

According to the embodiment shown in FIGS. 4A-C, the apparatus 10 further comprises a compact housing 11 (typically comprising a cover), a microphone 12, a PCB 15 and a communication port 20 (See FIG. 1A, 1C) for receiving power from an external power source for powering, and/or charging, the apparatus 10. The communication port 20 is typically a micro-USB connection, which can be used for communication and receiving power from an external power source. This embodiment is particularly suitable as a compact apparatus 10 that is light and easy to carry.

According to an embodiment, the apparatus 10 contains its own power source. An advantage with this embodiment is that it is a mobile device that can be used more or less everywhere.

Typically, this embodiment is embodied as an USB format device. A multicolor light panel is provided underneath the cover. Light goes through holes in the cover.

Now is referred to FIGS. 5A-C.

FIGS. 5A-C show an apparatus according to an alternative embodiment of the invention; wherein FIG. 5A shows the apparatus in a perspective view; FIG. 5B shows the apparatus for language identification and a cover therefore separated before assembly together; and FIG. 5C shows the apparatus in another perspective view. The cover can be used for surfacing a company logotype

According to another embodiment (not shown), the apparatus 10 can be used to connect to and control other peripherals if one wants to change the environment in other ways, e.g., use wi-fi to connected devices that can be remotely controlled or connect them directly to the apparatus 10.

According to another embodiments (not shown), other existing communication devices such as mobile phones, laptops, tablets, desktop computers and similar computational devices may be arranged in communication with the apparatus 10.

The various embodiments of the computational circuitry in the various embodiments of the invention can be implemented with the help of computer program code that resides in a memory and causes a suitable processor to carry out at least the computational part of the invention.

It is obvious that the present invention is not limited solely to the above-presented embodiments, but it can be modified within the scope of the appended claims.

## Claims

1. An apparatus for language identification, which apparatus (10) comprises a housing (11), at least one microphone (12) provided at the housing, computational circuitry (14), a controller (16) for visual indicators, and visual indicators (18), **characterized in that** the apparatus (10) is configured to electronically receive at least one first input signal (Si1) from the at least one microphone (12), the at least one first input signal (Si1) representing a spoken language received by the at least one microphone (12), wherein the apparatus (10) is configured to transmit the at least first input signal (Si1) to the computational circuitry (14) configured to indicate a match or no match with a desired language to be spoken and in response configured to transmit at least one first output signal (So1) to a visual indicator controller (16) configured to control one or more visual indicators (18) configured to at least visually indicate match or no match.

2. The apparatus according to claim 1, wherein, the visual indicators (18) have multiple colors and variable intensity.

3. The apparatus according to claim 1, the wherein visual indicators (18) are combined with audio output (20), or separate audio indicators (18').

4. The apparatus according to claim 1, 2, or 3, wherein the computational circuitry (14) comprises a processor (14'), memory (14") including computer program code, the memory and the computer program code configured to, with the processor, cause the computational circuitry (14) to electronically receive the at least one first input signal (Sin1) from the at least one microphone (12), electronically determine the match of a spoken language with at least one desired language to be spoken, and to transmit the first output signal (Sout1) to the visual indicator controller(s) configured to control one or more visual indicators (18) configured to at least visually indicate match or no match.

5. The apparatus according to any one of claims 1, 2, 3 or 4, wherein the computational circuitry (14) comprises a Raspberry Pi 3B device.

6. The apparatus according to claim 5, wherein the Raspberry Pi 3B device and the visual indicator controller (16) are mounted on a printed circuit board, PCB (15).

7. The apparatus according to any of the previous claims, wherein the apparatus (10) further comprises a power source (19) for powering the apparatus (10).

8. The apparatus according to any of the previous claims, wherein the apparatus (10) further comprises a communication port (20) for receiving power from an external power source for powering the apparatus (10).

9. The apparatus according to claim 8, wherein the communication port (20) is a micro-USB communication port.

10. The apparatus according to any of the previous claims, wherein the visual indicators (18) are light-emitting indicators.

11. The apparatus according to claim 10, wherein the visual indicators (18) comprise a LED-stripe.

12. The apparatus according to any of the previous claims, wherein the apparatus (10) is a stand-alone unit.

13. The apparatus according to any of the previous claims, wherein the apparatus (10) is configured to connect to and control other peripherals.

14. The apparatus according to any of the previous claims, wherein the apparatus (10) is configured to communicate with one or more communication device such as mobile phones, laptops, tablets, desktop computers and similar computational devices.
